(19) Europäisches Patentamt

European Patent Office

Office européen des brevets

(11) **EP 2 120 181 A1**

(12) **EUROPEAN PATENT APPLICATION**

(43) Date of publication:
**18.11.2009 Bulletin 2009/47**

(51) Int Cl.:
**G06K 9/00** *(2006.01)* **G06K 9/62** *(2006.01)*
**H04L 29/06** *(2006.01)*

(21) Application number: **08008989.9**

(22) Date of filing: **15.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Deutsche Telekom AG**
**53113 Bonn (DE)**

• **Technische Universität Berlin**
**10623 Berlin (DE)**

(72) Inventor: **Krishnamurthy, Sudha Dr.,**
**D-10627 Berlin (DE)**

(74) Representative: **Kampfenkel, Klaus**
**Blumbach - Zinngrebe**
**Patentanwälte**
**Alexandrastrasse 5**
**65187 Wiesbaden (DE)**

(54) **A sensor node, a sensor network and a method for autonomous decision-making in sensor networks**

(57) For providing an improved approach to employ machine learning techniques in a network of embedded sensor nodes for making decisions autonomously, such as detecting anomalous behavior in a sensor network, the invention proposes a method for classifying data generated by at least one sensor node (100, 211-218) of a sensor network (200) by statistical processing of said data based on linear discriminant analysis, wherein said data is represented by an n-dimensional test feature vector, comprising a learning phase (310-360) with the steps of defining at least two classes into which an n-dimensional feature vector may be classified, providing a set of labeled n-dimensional learning feature vectors, each of which is associated with one of said classes, and preprocessing of said set of labeled learning feature vectors, and an inference phase (410, 420) with the steps of calculating (410) for each class a linear discriminant function of the n-dimensional test feature vector representing the data to be classified, based on the results of said preprocessing, and assigning (420) the data to the class for which the calculated linear discriminant function yields the highest result. In particular, the method is capable of correlating different kinds of data in order to make decisions.

The invention further proposes a sensor node (100) and a sensor network (200) adapted for performing the method.

Fig. 3

Set of $\{(F_i, C_i) \mid i = 1,...,N;$ with $C_i$ the labeled class of feature vector $F_i\}$

Split each $F_i$ into sub-vectors $(F_{i1}, F_{i2}, ..., F_{ik})$ of maximum size 3. — 310

$(F_{i1}, F_{i2}, ..., F_{ik})$

For each class j and each sub-vector index, calculate the mean vector $M_{js}$ with s=1,...,k. The class mean vectors for class j = $(M_{j1}, M_{j2}, ..., M_{jk})$. — 320

$(M_{j1}, M_{j2}, ..., M_{jk})$

For each sub-vector index compute the global mean vector $G_s$ from the mean vector of all classes. For each sub-vector index compute the intra-class scatter for each class with respect to $G_s$. — 330

$G_s, (M_{j1}, M_{j2}, ..., M_{jk})$

For each class j and each sub-vector index, compute the covariance matrix with respect to $G_s$. Then for each subvector index s=1,...,k, compute the group covariance matrix $R_s$ by grouping together the s-th sub-vectors of the different classes (e.g. $M_{1s}, M_{2s}, ..., M_{As}$, A is the number of classes, and s is the index of the sub-vector). — 340

$(R_1, R_2, ..., R_k)$

For each covariance matrix $R_s$, compute its inverse $R_s^{-1}$, where each $R_s$ has maximum dimension 3. — 350

$(R_1^{-1}, R_2^{-1}, ..., R_k^{-1}), M_{j1}, M_{j2}, ..., M_{jk}$

For each class j, compute the partial discriminant $P_{js}$ and Mahalanobis distance $L_{js}$ for its sub-vectors using the formulas $P_{js} = M_{js} * R_s^{-1}$ and $L_{js} = 0.5 * P_{js} * M_{js}^T$, wherein $M_{js}^T$ is the transpose of the s'th mean sub-vector of class j — 360

## Description

Field of the invention

The invention relates to sensor networks in general, and especially to machine learning techniques employed in a sensor network.

Background of the invention

One of the characteristics of wireless sensor networks (WSN) that distinguishes them from other types of networks is that they are capable of being embedded within physical environments, where they can function in an unattended manner. In some of these physical environments, the embedded sensor networks may be intermittently disconnected from remote base stations, and hence, they need to be self-reliant. Since the sensor networks primarily sense and gather information from the environments in which they are deployed, they can be used for providing data and event services.

However, to operate in disconnected environments, these networks must be able to make decisions autonomously. For example, the unattended nature of the sensor networks, combined with their proximity to open physical environments, makes them vulnerable to several anomalies that may unnecessarily deprive the sensor nodes of their energy. Since energy-efficient functioning is critical to the operation of these networks, these types of anomalies disrupt the smooth functioning of the network. Hence, it is desirable that the network learns to detect such anomalies and decides which nodes are displaying anomalous behavior. By doing so, an untethered sensor network could become responsive, even in the presence of anomalies and failures in the network.

It is known that machine learning techniques can be applied to learn and adapt to behavior in given environments, as for instance described in US 2003/0229471 A1. Machine learning techniques may be supervised or unsupervised. In supervised learning, labeled datasets are used for training. While supervised learning has a good detection accuracy when the patterns are known, one of the drawbacks is that it may not always be possible to generate accurate labeled datasets for training, especially when the patterns are unknown. In such cases, unsupervised learning is preferable, because it does not require labeled datasets and can be used to learn about previously unknown patterns.

Decision tree learning is a type of supervised learning technique that creates a decision tree from the training data. The leaves of the tree represent final decisions and the entire path leading to a leaf node effectively represents the rule for arriving at that decision. While inferencing using a decision tree is computationally simple, the trees can easily grow to a large size as new rules emerge and this consumes significant memory, which is a limited resource in sensor nodes. Moreover, decision trees are not always the best learners in terms of accuracy, compared to other techniques.

Rule-based learning is another closely related supervised technique which uses IF-THEN rules for making decisions. It is particularly useful when human readable rules are needed. The accuracy of detection depends on formulating well-formed rules and it may not always be possible to completely automate the process of generating the rules and optimizing the rule processing, as new rules emerge. Moreover, rules are typically application-specific and can seldom be parametrized or reused in a way that can be applied to a variety of applications.

Support vector machines (SVM) are another kind of supervised learning technique. SVMs generate a separating hyperplane from the labeled training vectors, which is then used for binary classification. SVMs generally have a short training time, but involve solving quadratic optimization problems, which are computationally too intensive to implement on embedded platforms with limited computational resources.

It is therefore an object of the present invention to show a new and improved approach for autonomous decision making in a sensor network, comprising sensor nodes of limited computational capacity and limited energy resources. Another object of the invention is to show a new approach to employ advanced machine learning techniques, so that they can be effectively applied in such a sensor network.

Summary of the Invention

The inventive solution of the object is achieved by each of the subject matter of the respective attached independent claims. Advantageous and/or preferred embodiments or refinements are the subject matter of the respective attached dependent claims.

The inventive method for classifying data generated by at least one sensor node of a sensor network by statistical processing of said data using linear discriminant analysis comprises a learning phase and an inference phase. The data to be classified is represented by an n-dimensional test feature vector, comprising n feature values, wherein the features can be anything the sensor node is adapted or programmed to detect. The learning phase comprises the steps of defining at least two classes into which an n-dimensional feature vector may be classified, providing a set of labeled n-dimensional learning feature vectors, each of which is associated with one of said classes, and pre-processing of said set of labeled learning feature vectors. The inference phase comprises the steps of calculating for each of said classes a linear discriminant function of the n-dimensional test feature vector, which represents the data to be classified, based on the results of the pre-processing in the learning phase, and assigning the data to the class for which the calculated linear discriminant function yields the highest value.

The method with special advantage is employed for autonomous decision-making in the sensor network. The different types of data collected by a sensor node often exhibit correlations and have some degree of ambiguity and imprecision. By utilizing the inventive method these factors are considered in order to make decisions, wherein the decision-making is performed by at least one sensor node, which does not have to be identical with the sensor node which generates the data on which a decision is based. In this respect, the step of assigning generated data to one of a number of pre-defined classes may already represent the decision-making step.

Since the labeled learning feature vectors represent sensor data, which typically exhibits correlations, the pre-processing of said set of labeled learning feature vectors preferably takes into account such correlations within the sensor data, in particular correlations between the different features.

The invention thus proposes to implement the linear discriminant analysis algorithm on resource constrained devices, such as embedded sensor nodes, in order to achieve autonomous decision-making in an untethered sensor network. Discriminant analysis is a statistical technique that is used to classify objects into mutually exclusive and exhaustive groups based on a set of measurable object's features. Discriminant analysis employs a supervised learning and classification technique for pattern recognition.

Compared to for instance the SVM approach, the linear discriminant analysis (LDA) approach, which is also a supervised learning technique, is considered a lightweight method, and thus is suitable for resource constrained devices. However, also LDA involves computationally intensive steps involving large matrices, which makes it difficult to perform with sensor nodes having limited computational capacity and limited energy resources.

In a most preferable embodiment of the inventive method the learning phase therefore comprises the steps of splitting each labeled n-dimensional learning feature vector into k m-dimensional learning sub-vectors with m < n and k ≥ 2, such that k sets of m-dimensional learning sub-vectors are formed, and pre-processing said k sets of learning sub-vectors, and the inference phase comprises the steps of splitting the n-dimensional test feature vector representing the data to be classified into k m-dimensional test sub-vectors, calculating for each class a partial linear discriminant function of each of said k test sub-vectors, based on the results of the pre-processing, and assigning the data to the class for which the sum of the calculated partial linear discriminant functions for the respective class has the highest value. The splitting of an n-dimensional vector preferably is performed in such a way, that disjoint m-dimensional sub-vectors are formed.

With special advantage the pre-processing of said k sets of learning sub-vectors in the learning phase comprises the steps of determining for each class and for each of said k sets of learning sub-vectors a mean sub-vector of the sub-vectors belonging to the respective class and set, determining for each of said k sets of learning sub-vectors a global mean sub-vector across all classes of the sub-vectors belonging to the respective set, determining for each class and for each of said k sets of learning sub-vectors an intra-class scatter with respect to the global mean sub-vector of the respective set, determining for each class and for each of said k sets of learning sub-vectors a covariance matrix of size $m \times m$, determining from said covariance matrices for each of said k sets of learning sub-vectors a group covariance matrix across all classes, determining the inverse of each of said group covariance matrices, and determining for each class and for each of said k sets of learning sub-vectors a Mahalanobis distance function. In this preferred embodiment of the invention the computational capacity needed for calculating matrices such as the covariance and especially the inverse of the group covariance matrices, is greatly reduced, since these matrices have a maximum size of $m \times m$, instead of $n \times n$.

Although in the following it is assumed that for each of said k sets of learning sub-vectors and the corresponding k test sub-vectors the value of m, which defines the length of the respective sub-vectors, is identical, since thereby the calculation process is simplified, also different values $m_k$ for different k could be utilized.

Depending on the number of features of the data to be classified and on the constraints with respect to computational capacity and power defined by the employed sensor nodes, the value of m with advantage is chosen accordingly. The upper limit for m can be any value, for instance 2, 3, 4, or even above, for which the capabilities of the sensor nodes suffice to perform the necessary calculations, in particular the calculation of the inverse covariance matrix of size $m \times m$. However, in a most preferred embodiment m has a maximum value of 3, since the calculation of the inverse of a $3 \times 3$ matrix can be managed by typical sensor nodes.

Therefore, by the method with great advantage an advanced machine learning technique is adapted in such a way that the computational complexity is reduced, so that it is viable for nodes with constrained resources.

In a preferred embodiment the method is employed to detect anomalous behavior of the sensor network, in particular such anomalous behavior which leads to depriving the sensor nodes of their energy. Accordingly, the defined classes preferably represent types of behavior of the sensor network, comprising at least one first class representing normal behavior and at least one second class representing anomalous behavior of the network. Hence, the sensor network learns to detect anomalies and decide which nodes are displaying anomalous behavior. By doing so, an untethered sensor network can become responsive, even in the presence of anomalies and failures in the network.

An anomalous behavior of the sensor network may arise from the communication aspect, for instance in the case of a wireless ad-hoc sensor network, or from the sensing aspect relating to the detection of sensor data by the sensor nodes. Accordingly, the data to be classified preferably comprises feature values relating to the communication aspect and also feature values relating to the sensing aspect.

In a preferred embodiment of the method the features of the n-dimensional test feature vector are measured by at least one sensor node at different communication layers, said communication layers comprising the physical layer, the link layer, the routing layer and/or the application layer of the sensor network.

In order to further conserve energy the data to be classified advantageously is generated by more than one sensor node, for instance by detecting different features by different sensor nodes, wherein the detected feature values are exchanged between the sensor nodes.

Furthermore, with special advantage the processing of data performed in the learning and/or in the inference phase comprises parallel processing of data by at least two sensor nodes of the sensor network. Accordingly, preferably the pre-processing of each of said k sets of learning sub-vectors and/or the calculating of the partial linear discriminant functions of each of said k test sub-vectors is performed by different sensor nodes of the sensor network. Thereby the sensor nodes can cooperatively utilize their limited energy and computational resources. For this purpose preferably said different sensor nodes form a group of neighboring sensor nodes.

An inventive sensor node, adapted to perform a method as described above, which typically is provided with limited computing capacity and limited energy resources, comprises a data collector module for collecting data, which is adapted to generate an n-dimensional feature test vector from collected data, a learning module adapted for pre-processing a set of labeled n-dimensional learning feature vectors, each of which is associated with one of at least two pre-defined classes, into which an n-dimensional feature vector may be classified, storage means for storing pre-processing results generated by the learning module, and an inference module adapted for calculating for each class a linear discriminant function of said n-dimensional test feature vector, based on the stored pre-processing results, and for assigning the test feature vector to the class for which the calculated linear discriminant function yields the highest result.

In a preferred embodiment the sensor node comprises a transceiver for communication, in particular wireless communication, with other sensor nodes in a sensor network. The sensor node further preferably is adapted to periodically measure at least one feature of a network layer, wherein said network layer preferably is one of the physical layer, the link layer, the routing layer and/or the application layer utilized in an ad-hoc sensor network.

In order to achieve a comparability of feature values measured at different times, the sensor node preferably is adapted to generate a normalized feature value from a number of measurements of a selected feature made over a pre-defined time interval.

A sensor network, which is adapted to perform a method as described above, and which comprises a plurality of interconnected sensor nodes as described above, also lies within the scope of the invention.

In order to support parallel processing by cooperating sensor nodes, an inventive sensor network preferably is adapted to organize its sensor nodes into groups of neighboring sensor nodes, wherein each group of sensor nodes is adapted to cooperatively perform a linear discriminant analysis of collected data.

Brief Description of the Figures

It is shown in

Fig. 1    schematically a preferred embodiment of an inventive sensor node,

Fig. 2    schematically a preferred embodiment of an inventive sensor network,

Fig. 3    schematically the learning phase of a preferred embodiment of the inventive method, and

Fig. 4    schematically the inference phase of a preferred embodiment of the inventive method.

Detailed Description of the Invention

Subsequently, preferred but exemplar embodiments of the invention are described in more detail with regard to the figures.

In the following preferred embodiment the inventive method is employed for anomaly detection in a sensor network based on linear discriminant analysis (LDA). However the method is not limited to this purpose, but can also be utilized for any other purpose, for which LDA is a suitable technique. In particular, the method may be employed in any application involving autonomous decision-making. Anomaly detection generally deals with the problem of detecting deviations from normal behavior. It comprises collecting data, which is then processed and analyzed for differentiating between normal and abnormal patterns. Normal behavior may be either learned automatically through training or preprogrammed as specifications. The basic assumption underlying anomaly detection systems is that normal behavior occurs a majority of the time, while significant deviations from normal behavior are classified as anomalies.

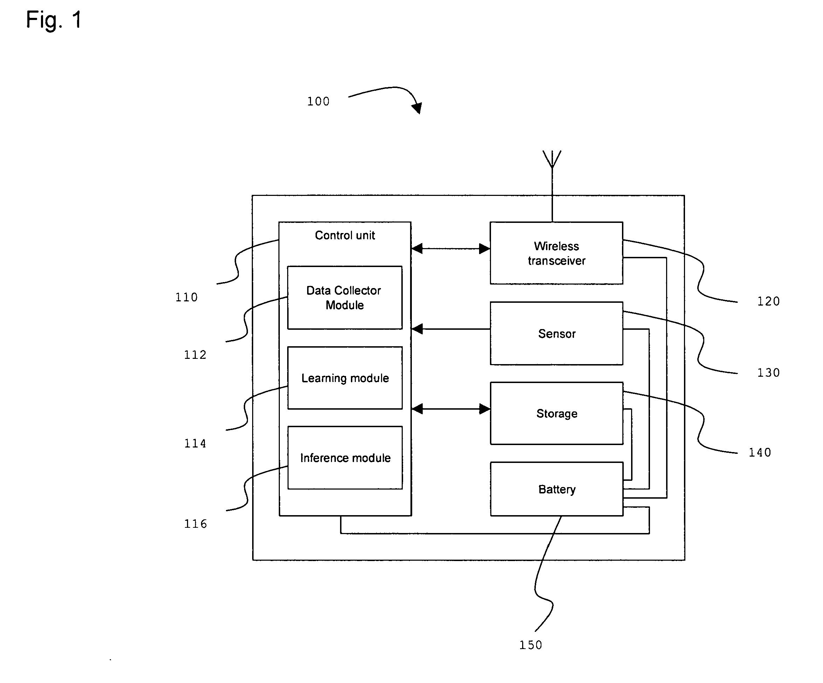

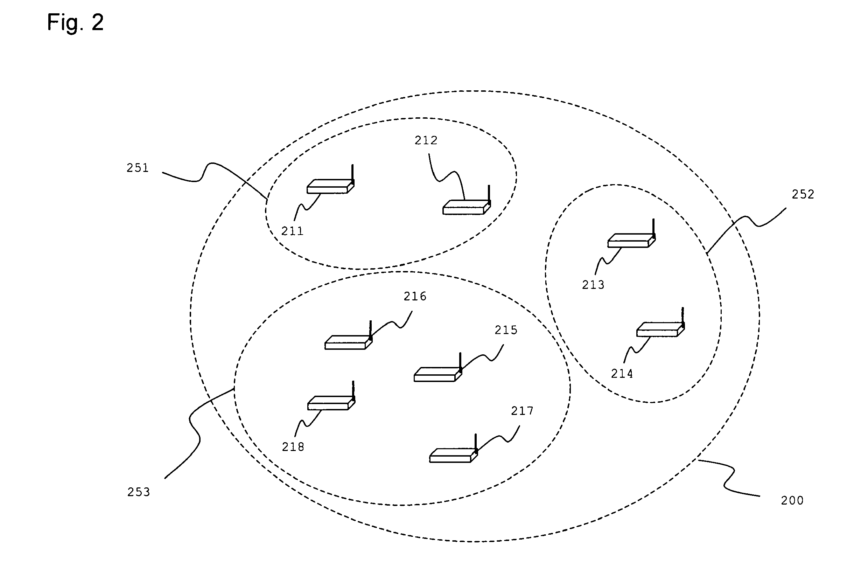

Fig. 1 shows a preferred embodiment of a sensor node 100 that can be utilized to form a wireless sensor network 200 as shown in Fig. 2, and which is adapted to perform an inventive method. The sensor node 100, which can for instance be provided as a mote, in the shown embodiment comprises a transceiver 120 for wirelessly communicating with other similar sensor nodes, at least one sensor 130 for generating data relating to parameters of the environment, and storage means 140 for storing event-related data. The transceiver 120, the sensor 130 and the storage means 140 are controlled by a control unit 110. Furthermore, all of the above described components of the sensor node 100 are powered by means of a battery 150 which has only limited energy.

In the embodiment shown in Fig. 1 the control unit 110 comprises a data collector module 112, a learning module 114 and an inference module 116, which for instance are provided as software modules.

A sensor network 200 , as shown in Fig. 2, is subject to some of the same network-based anomalies as general ad-hoc networks. While many of these anomalies disrupt the information flowing in the network, in the case of sensor networks, they also have the additional effect of causing energy deprivation and thereby, reducing the lifetime of the network. Despite being vulnerable to some of the same anomalies, the techniques used to detect anomalies in general ad-hoc networks cannot always be directly applied in the case of sensor networks, because of the following unique challenges.

First, the sensor nodes 211-218 of the sensor network 200 have limited computational, storage, and energy resources. Typically, the sensor nodes 211-218 sleep and wake up periodically, in order to conserve energy. Therefore, each node may be able to collect only partial data from its local neighborhood and the information gathered by a single node may not always provide strong evidence to infer certain anomalies. Moreover, there are no centralized agents that have a global view in the case of a disconnected network. So the anomaly detection cannot fully rely on the data and inference from any single node and should be able to make reasonably accurate inferences from partial or approximate data. Hence, a cooperative detection scheme that leverages the high density and inherent redundancy in sensor networks is preferably employed. For this purpose, the sensor nodes 211-218 preferably are organized into groups 251, 252 and 253 of neighboring sensor nodes.

Second, currently the MAC, routing, and sensing protocols in sensor networks are still evolving and to a large extent, application-specific. This poses an implementation challenge, as the type of information that can be gathered and the instrumentation needed to collect that information varies, depending on the underlying protocols. Moreover, the demarcation between the different protocol layers in sensor networks is somewhat thin. Certain anomalies that result in energy deprivation may originate at multiple protocol layers. Therefore, the inventive method preferably provides for detecting anomalies by aggregating and correlating information gathered from across different layers.

The function of collecting data is provided by the data collector module 112 of each of the sensor nodes 211-218. The collection of data preferably is decentralized. Whenever a sensor node 211-218 is awake, it periodically measures different network layer and application layer features.

During the learning phase, the learning module 114 learns from a set of training samples, which may consist of normal and anomalous patterns. The knowledge acquired during the learning phase is then used by the inference engine of the inference module 116 to detect anomalies during the detection phase. The learning and detection phases are performed at runtime and can be repeated iteratively to enable continuous learning. The utilized linear discriminant analysis (LDA) is a supervised learning technique, and accordingly labeled datasets are used for training.

Discriminant analysis is a statistical technique that is used to classify objects into mutually exclusive and exhaustive groups based on a set of measurable object's features. Discriminant analysis employs a supervised learning and classification technique for pattern recognition. The discriminant analysis technique preferably utilized by the inventive method is based on the steps presented in "Discriminant Analysis Tutorial" by K. Teknomo (http://people.revoledu.com/kardi/tutorial/LDA/index.htm), which can be used to detect and classify an observation into one of multiple known classes.

One of the challenges in using the LDA technique at runtime on an embedded platform with limited computational and storage resources, like the sensor notes 211-218 of sensor network 200, is the computation of the inverse matrix of dimension n, where n is the size of the feature vector. For smaller dimensions ($n \leq 3$), the inverse matrix can be easily computed. However, computing the inverse of a matrix of larger dimensions at runtime may not be feasible on nodes with limited computational and storage resources.

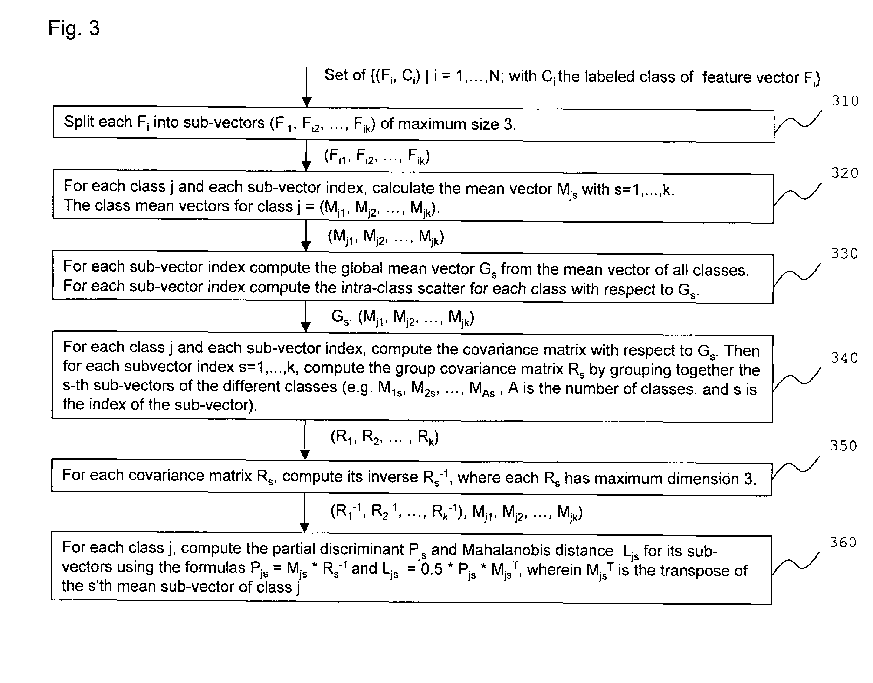

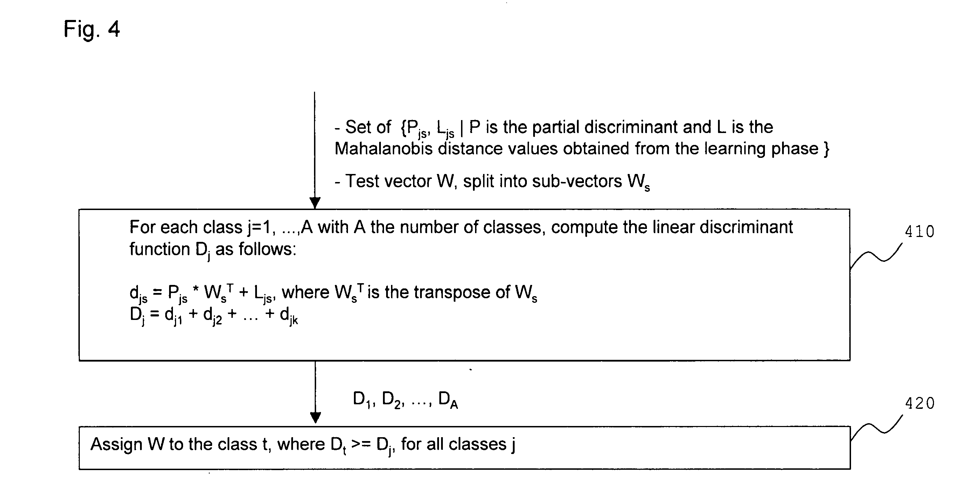

In the following a most preferred embodiment of the inventive method is described, the respective learning and inference phases of which are shown in Figs. 3 and 4. This embodiment of the method is especially efficient and most suitable for resource-constrained environments.

In a first step 310, the dimensionality of the original feature vector is reduced by splitting each n-dimensional feature vector $F_i$ with $i \in \{1, ..., n\}$ into smaller, disjoint sub-vectors $\{F_{i1}, F_{i2}, ..., F_{ik}\}$, where each $F_{is}$ with $s \in \{1, ..., k\}$ is an m-dimensional sub-vector with $m \leq 3$.

Then the learning method is applied in a similar way to each of the k sets of sub-vectors $F_{is}$ with $i = 1,..., N$ and s the index of the respective one of the k sets of sub-vectors, as outlined in the following:

- in step 320 for each class $C_j$ with $j = 1, ..., A$, with A the number of pre-defined classes, and each index $s = 1, ..., k$, with k the number of sub-vectors per n-dimensional feature vector, the m-dimensional mean feature vectors $M_{js}$ is computed from all learning feature sub-vectors $F_{is}$ belonging to the respective class $C_j$,
- in step 330 for each index $s = 1, ..., k$ the global mean feature vector $G_s$ is computed from all learning fea-

ture vectors $F_{is}$ having the respective index, and for each index s = 1, ..., k and for each class $C_j$ with j = 1, ..., A the intra-class scatter is determined for the $F_{is}$ by computing the deviation of $F_{is}$ from $G_s$,

- in step 340 for each class $C_j$ with j = 1,...,A and each index s = 1, ..., k the mxm covariance matrix $V_{js}$ is computed based on the determined intra-class scatter, with m the number of features of the learning feature sub-vectors $F_{is}$. For each index s = 1, ..., k, from the covariance matrices $V_{js}$ the mxm group covariance matrices $R_s$ across all classes are computed,

- in step 350 for each index s = 1, ..., k from the group covariance matrices $R_s$ the mxm inverse group covariance matrices $R_s^{-1}$ are computed. Since each $R_s$ is a matrix of maximum dimension 3, the sensor nodes can easily compute the inverse matrix, and

- in step 360 for each class $C_j$ with j = 1, ..., A and each index s = 1, ..., k the partial discriminant $P_{js}$ and the Mahalanobis distance $L_{js}$ are computed by the formulas
$P_{js} = M_{js} \cdot R_s^{-1}$, and
$L_{js} = 0.5 \cdot P_{js} \cdot M_{js}^T$, wherein
$M_{js}^T$ is the transpose of the vector $M_{js}$.

The Mahalanobis distance is a metric to measure the similarity between samples sets, and unlike the simple Euclidean distance takes into account the correlations of the data sets.

In the LDA procedure outlined in Fig. 3, instead of a single group covariance matrix having dimension n > 3, where n is the size of the feature vector, the original feature vector of each class is split into k sub-vectors, the sub-vectors of the same index across all classes are grouped and from that the group covariance matrix corresponding to each index is computed. So as a result of splitting the feature vectors of each class into k sub-vectors of maximum length 3, k corresponding group covariance matrices of dimension no greater than 3 are obtained at the end of step 340 of Fig. 3.

With advantage the partial discriminant function for each class is pre-computed, as shown in step 360 of Fig. 3, in order to reduce the computational overhead of the embedded nodes during the detection phase, shown in Fig. 4.

During the detection process as shown in Fig. 4, in step 410 the test vector W is compared with each class by computing the value of the linear discriminant function of each class in order to find the class W belongs to. Since in the method as shown in Figs. 3 and 4 sub-vectors are provided for each class, first the test vector W is split into k sub-vectors in a corresponding way as the learning feature vectors, and for each sub-vector $W_s$ with s = 1, ..., k of test vector W a discriminant value is computed as follows:

$d_{js} = P_{js} \cdot W_s^T + L_{js}$, wherein
$W_s^T$ is the transpose of the respective sub-vector of test vector W.

Then the value of the discriminant function for each class $C_j$ with j = 1, ..., A is computed as

$$D_j = d_{j1} + d_{j2} + \ ... \ + d_{jk}.$$

In step 420 the test vector W is then assigned to the class that results in the maximum value of the discriminant function $D_j$ for the test vector W, which indicates that the samples in the respective class more closely match the test vector W than the samples in the other classes.

The invention provides an effective way for a network of embedded nodes to learn and detect known patterns based on a supervised machine learning technique. In particular the invention advantageously provides a feasible method to execute linear discriminant analysis, which can be used as a supervised learning technique within a network of embedded nodes despite their constrained resources, instead of depending on some remote, powerful node. The supervised learning method can be used by the embedded nodes to learn and make decisions autonomously. This can be used in a variety of applications, as for instance learning and classifying different events using a network of resource-constrained sensor nodes and also detecting anomalies and faults within the network, thereby enabling the network to become autonomous.

By splitting the feature vectors into smaller independent sub-vectors, the operations with special advantage can be parallelized. So either the same embedded node can operate on the different sub-vectors concurrently, thereby reducing the execution time, or a group of neighboring embedded nodes can operate on different sub-vectors, since they are independent, and thereby cooperatively utilize their limited energy and computational resources.

In an exemplary application for automatically detecting anomalous behaviour within the network, the embedded nodes periodically collect different features from the networking layers and the values measured are collected into a feature vector. The feature vectors collected in this manner over a period of time can then be used by the embedded nodes to first learn about the different types of behavior in the network using the LDA method shown in Figs. 3 and 4. The nodes can then use that knowledge to classify an observation into one of multiple known classes. This process can be illustrated with an example, which the inventors have implemented and tested on embedded devices.

In an intrusion detection application, the values of the following 6 features are measured from the different networking layers: carrier sensing count, packet send ratio, data retransmission count, packet drop count, misdirection count, and sensing report count. The first three features are collected from the MAC layer and below, whereas the remaining three features are collected from the layers above the MAC layer.

In the following the preferred examples of features for an anomaly detection application are described in more detail. The features may be different for other classification applications.

A. Carrier Sensing Count

Before attempting a transmission, a node senses the physical channel to see if it is busy. If the channel is busy, it uses the backoff mechanism to wait for the backoff interval and attempts transmission again. If the channel is consistently busy, it may be due to either congestion or the presence of a physical jammer. A physical jammer can prevent a legitimate sender in its neighborhood from sending out packets, because the channel might appear constantly busy to the sender. To detect this anomalous behavior, the carrier sensing time may be used. In the described embodiment each node measures the carrier sensing count, which is a physical layer attribute that determines the number of times a node senses the channel to be busy and has to backoff, before transmitting a packet. If that value exceeds a certain threshold during an interval t, it may indicate the occurrence of physical jamming. In the case of Micaz motes, which use the IEEE 802.15.4 compliant Chipcon CC2420 radio, the carrier sensing mechanism probes the signal strength values to identify a busy channel. If the sensed signal strength value is above a certain threshold, then the channel is regarded as busy. Each time a node senses the channel to be busy, it increments the carrier sensing count. While the B-MAC implementation in TinyOS uses an adaptive threshold for signal strength comparison, in the described embodiment a fixed threshold i used. This threshold may be determined using theoretical models or by empirical means.

B. Retransmission Count

The retransmission count is a link-layer attribute that measures the number of times the link-layer of a node had to retransmit a packet, because the packet was not successfully delivered to the destination. The delivery failure may either be due to anomalous behavior or transient packet collisions in the wireless channel. In typical wireless medium access control, the nodes trying to transmit at the same time follow a protocol to avoid collisions. The MAC protocol in Micaz motes as well as in many other ad-hoc networks is based on carrier sense multiple access (CSMA). During normal CSMA operation, when the sender tries to transmit a packet, it will first continually sense the channel until it detects the channel to be idle, after which it will wait an extra amount of time, in order to ensure that the channel is clear. In 802.11 based networks, the data transmission is preceded by RTS/CTS signaling to reserve the channel. However, the CSMA-based B-MAC used in TinyOS provides minimal functionality and does not use RTS-CTS signaling, although ACK for data can be enabled as an option. To measure the retransmission count, we enabled the ACK option in B-MAC. As a result, when a sender fails to receive an ACK, it retransmits the data packet. A high value of the data retransmission count during successive time intervals may indicate the presence of an anomalous node in the neighborhood that is deliberating causing collisions.

C. Packet Send Ratio

The packet send ratio (PSR) is a link layer attribute that measures the ratio of the number of packets that are successfully sent out by the link layer of a legitimate sender, compared to the number of packets it intends to send out during an interval t. As explained earlier, in the CSMA MAC protocol used by motes and other ad-hoc networks, a sender has to sense the channel to be in an idle state for at least some random amount of time, before it can send out a packet. A radio interference attack, such as jamming, may cause the channel to be sensed as busy, causing the transmission to be delayed and the packet to be buffered. If too many packets are buffered at the MAC layer, the newly arriving packets may be dropped, because of buffer overflow. Furthermore, collisions in the channel may result in multiple retransmissions, as explained in the previous case. This causes packets to be buffered for a long time at the MAC layer, resulting in a timeout, and again causing some of the packets to be dropped. Both of these cases result in a low value of PSR and hence, the PSR can be used in conjunction with the features discussed above, in order to detect certain anomalies, such as collisions and jamming.

D. Packet Drop Count

The packet drop count is a routing layer attribute that measures the number of packets dropped by the next-hop node during an interval t. A node may drop a packet either because it is malicious or as mentioned above, due to buffer overflows. The packet drop ratio, in conjunction with some of the other features listed earlier, can be used to detect some of the anomalies. To measure this value, the described embodiment uses a routing protocol that is based on a logical grid routing protocol, which views the network as being partitioned into logical grids. Nodes within the same grid are within communication range of each other and each grid has a cluster-head or manager. The managers are connected through a multi-hop route based on a spanning tree. Every node routes messages to the destination through its next-hop node in the spanning tree. In the logical grid routing protocol used in the described embodiment, if a sender node S is a non-manager, then its next-hop node is the manager of the grid that S belongs to. On the other hand, if the sender S is a manager of a grid, then its next-hop node is its parent in the spanning tree that is used for routing. To measure the packet drop count, advantage is taken of the fact that in wireless networks, it is possible for a node to eavesdrop on the transmissions of its neighbors within a communication range. A snoop module is utilized that allows every node in the network to snoop on the transmissions of its next-hop neighbors. When a sender S forwards a packet P to its next-hop neighbor N, S takes a pessimistic approach and increments the packet drop counter that it maintains for N. S then remains awake for some time to snoop on the channel and if it finds that N has forwarded its packet P, then it decrements the packet drop counter for N. A non-zero value of the packet drop counter at the end of a time interval indicates the number of packets that the next-hop node has potentially during that interval. If the drop value is consistently high during successive time intervals, it may indicate that the next-hop node is malicious. In the described embodiment, each node measures the packet drop count only for the set of packets that it forwarded to its manager. If a node suspects its manager of dropping packets, the nodes within a zone can use their respective packet drop measurements to collaboratively infer whether their manager is maliciously dropping packets.

### E. Packet Misdirection Count

The misdirection counter is a routing layer attribute that measures the number of packets misdirected by the next-hop node. As in the case of the packet drop count, nodes use the snoop module to eavesdrop on the next-hop node. Whenever S forwards a packet P to its next-hop node N, it snoops on the channel for some time to listen to N's transmissions and checks the packet headers to verify if N has modified the destination field for the packets forwarded by S. In such a case, S treats it as a misdirection and increments the misdirection counter for node N. The number of packets misdirected by a node during an interval t can then be compared to a threshold to detect whether a node is malicious.

### F. Sensing Report Count

Typically in a sensor network, a node informs its manager or the sink node when it senses an event of interest. The sensing count is an application layer attribute measured by a destination node that indicates the number of sensing reports received from a source node during an interval t. An inconsistent number of sensing reports from a node can be used to detect fake sensing anomalies.

The data collector module 112 periodically pulls the measurements from the different layers and stores them in buffers in storage means 140. Since these feature values may have different ranges, the data collector normalizes the values and constructs a feature vector F, so that each feature value lies in the range [0.0, 1.0]. The data collector in each node 211-218 collects K measurements during a given time interval for each of the features and normalizes the feature values $f_i$, as follows:

$f_1$ : The fraction of measurements (among K measurements) that have a carrier sense count value greater than a threshold $t_1$. So if for instance $t_1 = 8$, K = 10, and 5 out of the K observations had carrier sense count values higher than 8, then the value of $f_1$ is 0.5. So $f_1$ is the probability that the carrier sense count is higher than the threshold $t_1$, among a set of K observations.

$f_2$ : The probability that the packet send ratio is less than a threshold $t_2$, among a set of K observations.

$f_3$ : The probability that the data retransmission count value is greater than a threshold $t_3$, among a set of K observations.

$f_4$ : The ratio of the total number of packets forwarded by the respective node that were dropped by its parent to the total number of packets that were forwarded by the respective node to its parent during the K observations.

$f_5$ : The ratio of the total number of packets forwarded by the respective node that were misdirected by its parent to the total number of packets that were forwarded by the respective node to its parent during the K observations.

$f_6$ : The probability that the number of sensing reports received from a node exceeded a threshold $t_4$, among a set of K observations.

In the described embodiment, the value of K for instance is 10 and suitable values for the different thresholds are chosen. The data collector module 112 computes the feature probabilities enumerated above for every K = 10 observations and constructs a learning feature vector F = [$f_1$, $f_2$, $f_3$, $f_4$, $f_5$, $f_6$]. It then passes up the new learning sample F to the learning module 114, which is then used as input to the learning techniques shown in Fig. 3. Although in the described embodiment the normalization is performed in the data collector module 112, it can also be performed by the learning module 114 before the inputs are further processed. In addition to achieving normalization, using the probability values for the features, instead of the raw measurements, has the additional advantage that it allows the learning module 114 to learn from observing the statistical behavior over successive time intervals. This makes the learning and detection more robust, because the learning samples from an anomalous node typically tend to be temporally correlated.

The feature vector **F** consists of the probability values of these 6 different features. The probability value of each feature is calculated based on the measurements obtained over a period of time. As described above, the linear discriminant analysis is an effective supervised learning method that can be used by the embedded nodes to classify patterns - in this case anomaly patterns.

However, in this example, if the feature vector of length 6 were used directly, the nodes would need to compute the inverse of a matrix of dimension 6, which is a computationally demanding operation, given the constrained resources of embedded nodes. So the method as shown in Figs. 3 and 4 is applied and first the vector **F** of length 6 is split into two sub-vectors, **F-lo** and **F-hi**. **F-lo** is a lower-layer feature vector containing the features collected by the MAC and lower layers. Thus, the vector **F-lo** = $(f_1, f_2, f_3)$, where $f_1$, $f_2$ and $f_3$ are the feature probabilities related to the carrier sensing count, packet send ratio, and data retransmission count. **F-hi** is a higher-layer feature vector containing the features corresponding to the layers above MAC. Thus, **F-hi** = $(f_4, f_5, f_6)$, where $f_4$, $f_5$ and $f_6$ are the feature probabilities related to the packet drop count, misdirection count, and sensing report count.

Thus, two feature sub-vectors of dimension 3 are provided, wherein to each of these two vectors the steps in Fig. 3 are applied independently. At the end of a learning phase, a pair of distance values (L-lo, L-hi) is obtained and a pair of mean feature vectors (M-lo, M-hi) for each class, and a pair of inverse group covariance matrices (R-lo_inv, R-hi_inv), all of which are of dimension 3. During the detection phase, for each class, the inference engine uses these pairs of values as shown in Fig. 4, to compute a pair of discriminant values (D-lo, D-hi) corresponding to the lower and higher layer features of the test vector. The total discriminant function for a class i is then computed as $D_i$ = D-$lo_i$ + D-$hi_i$ and the test vector is assigned to the class yielding the maximum discriminant value, as stated in step 420 of Fig. 4. Thus, by splitting the original feature vectors into smaller-sized feature vectors, a most efficient way for a learning process based on a discriminant analysis technique to be executed on a network of embedded nodes with limited resources is provided.

**Claims**

1. A method for classifying data generated by at least one sensor node (100, 211-218) of a sensor network (200) by statistical processing of said data based on linear discriminant analysis, wherein said data is represented by an n-dimensional test feature vector, comprising a learning phase (310-360) with the steps of

   - defining at least two classes into which an n-dimensional feature vector may be classified,
   - providing a set of labeled n-dimensional learning feature vectors, each of which is associated with one of said classes,
   - pre-processing of said set of labeled learning feature vectors, and
   an inference phase (410, 420) with the steps of
   - calculating (410) for each class a linear discriminant function of the n-dimensional test feature vector representing the data to be classified, based on the results of said pre-processing, and
   - assigning (420) the data to the class for which the calculated linear discriminant function yields the highest value.

2. The method of claim 1, wherein the classification of the data generated by the at least one sensor node (100, 211-218) of said sensor network (200) is employed for autonomous decision-making in the sensor network.

3. The method of any one of claims 1 or 2, wherein the pre-processing of said set of labeled learning feature vectors takes into account correlations between the different features.

4. The method of any one of the preceding claims, wherein the data to be classified comprises data generated from at least two different sensor nodes (211-218) of the sensor network (200).

5. The method of any one of the preceding claims, wherein the learning phase comprises the steps of

   - splitting (310) each labeled n-dimensional learning feature vector into k m-dimensional learning sub-vectors with m < n and k ≥ 2, such that k sets of m-dimensional learning sub-vectors are formed, and
   - pre-processing said k sets of learning sub-vectors, and wherein the inference phase comprises the steps of
   - splitting the n-dimensional test feature vector representing the data to be classified into k m-dimensional test sub-vectors,
   - calculating (410) for each class a partial linear discriminant function of each of said k test sub-vectors, based on the results of the pre-processing, and
   - assigning (420) the data to the class for which the sum of the calculated partial linear discriminant functions for the respective class has the highest value.

6. The method of claim 5, wherein pre-processing said k sets of learning sub-vectors in the learning phase comprises the steps of

   - determining for each class and for each of said k sets of learning sub-vectors, a mean sub-vector of the sub-vectors belonging to the respective class and set (320),

- determining for each of said k sets of learning sub-vectors a global mean sub-vector across all classes of the sub-vectors belonging to the respective set (330),

- determining for each class and for each of said k sets of learning sub-vectors an intra-class scatter with respect to the global mean sub-vector of the respective set (330),

- determining for each class and for each of said k sets of learning sub-vectors a covariance matrix of size m x m (340),

- determining from said covariance matrices for each of said k sets of learning sub-vectors a group covariance matrix across all classes (340),

- determining the inverse of each of said group covariance matrices (350), and

- determining for each class and for each of said k sets of learning sub-vectors a Mahalanobis distance function (360).

7. The method of any one of claims 5 or 6, wherein the pre-processing of each of said k sets of learning sub-vectors and/or the calculating of the partial linear discriminant functions of each of said k test sub-vectors is performed by different sensor nodes (211-218) of the sensor network (200).

8. The method of claim 7, wherein said different sensor nodes form a group (250) of neighboring sensor nodes (215-218).

9. The method of any one of the preceding claims, wherein the defined classes represent types of behavior of the sensor network, comprising at least one first class representing normal behavior and at least one second class representing anomalous behavior of the network.

10. The method of any one of the preceding claims, wherein the features of the n-dimensional feature vectors comprise features relating to the communication within the sensor network (200) and/or features relating to the detection of sensor data by the sensor nodes (211-218) of the sensor network (200).

11. The method of claim 10, wherein said features are measured by at least one sensor node at different communication layers, said communication layers comprising the physical layer, the link layer, the routing layer and/or the application layer of the sensor network (200).

12. A sensor node (100), adapted to perform a method according to any of claims 1 to 11, provided with limited computing capacity and limited energy resources, comprising

- a data collector module (112) for collecting data, adapted to generate an n-dimensional feature test vector from collected data,

- a learning module (114) adapted for pre-processing a set of labeled n-dimensional learning feature vectors, each of which is associated with one of at least two pre-defined classes, into which an n-dimensional feature vector may be classified,

- storage means (140) for storing pre-processing results generated by the learning module,

- an inference module (116) adapted for calculating (410) for each class a linear discriminant function of said n-dimensional test feature vector, based on the stored pre-processing results, and for assigning (420) the test feature vector to the class for which the calculated linear discriminant function yields the highest value.

13. The sensor node of claim 12, adapted to periodically measure at least one feature of a communication network layer.

14. The sensor node of claim 13, adapted to generate a normalized feature value from a number of measurements of a selected feature made over a pre-defined time interval.

15. The sensor node of any one of the preceding claims, comprising a transceiver (120) for wireless communication with other sensor nodes.

16. A sensor network (200), adapted to perform a method according to any of claims 1 to 11, comprising a plurality of interconnected sensor nodes (211-218) according to any one of claims 12 to 15.

17. The sensor network (200) of claim 16, adapted to organize its sensor nodes (211-218) into groups (251-253) of neighboring sensor nodes, wherein each group (251-253) of sensor nodes is adapted to cooperatively perform a linear discriminant analysis of collected data.

Fig. 1

Fig. 2

## Fig. 3

Set of $\{(F_i, C_i) \mid i = 1,...,N;$ with $C_i$ the labeled class of feature vector $F_i\}$

**310** — Split each $F_i$ into sub-vectors $(F_{i1}, F_{i2}, ..., F_{ik})$ of maximum size 3.

$(F_{i1}, F_{i2}, ..., F_{ik})$

**320** — For each class j and each sub-vector index, calculate the mean vector $M_{js}$ with $s=1,...,k$.
The class mean vectors for class j = $(M_{j1}, M_{j2}, ..., M_{jk})$.

$(M_{j1}, M_{j2}, ..., M_{jk})$

**330** — For each sub-vector index compute the global mean vector $G_s$ from the mean vector of all classes.
For each sub-vector index compute the intra-class scatter for each class with respect to $G_s$.

$G_s, (M_{j1}, M_{j2}, ..., M_{jk})$

**340** — For each class j and each sub-vector index, compute the covariance matrix with respect to $G_s$. Then for each subvector index $s=1,...,k$, compute the group covariance matrix $R_s$ by grouping together the s-th sub-vectors of the different classes (e.g. $M_{1s}, M_{2s}, ..., M_{As}$, A is the number of classes, and s is the index of the sub-vector).

$(R_1, R_2, ... , R_k)$

**350** — For each covariance matrix $R_s$, compute its inverse $R_s^{-1}$, where each $R_s$ has maximum dimension 3.

$(R_1^{-1}, R_2^{-1}, ..., R_k^{-1}), M_{j1}, M_{j2}, ..., M_{jk})$

**360** — For each class j, compute the partial discriminant $P_{js}$ and Mahalanobis distance $L_{js}$ for its sub-vectors using the formulas $P_{js} = M_{js} * R_s^{-1}$ and $L_{js} = 0.5 * P_{js} * M_{js}^T$, wherein $M_{js}^T$ is the transpose of the s'th mean sub-vector of class j

EP 2 120 181 A1

Fig. 4

- Set of {$P_{js}$, $L_{js}$ | P is the partial discriminant and L is the Mahalanobis distance values obtained from the learning phase }

- Test vector W, split into sub-vectors $W_s$

410

For each class j=1, ...,A with A the number of classes, compute the linear discriminant function $D_j$ as follows:

$d_{js} = P_{js} * W_s^T + L_{js}$, where $W_s^T$ is the transpose of $W_s$
$D_j = d_{j1} + d_{j2} + ... + d_{jk}$

$D_1, D_2, ..., D_A$

420

Assign W to the class t, where $D_t >= D_j$ for all classes j

EP 2 120 181 A1

Europäisches Patentamt
European Patent Office
Office européen des brevets

**EUROPEAN SEARCH REPORT**

Application Number

EP 08 00 8989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUDA R O ET AL: "Pattern Classification, Bayesian Decision Theory" PATTERN CLASSIFICATION, NEW YORK, JOHN WILEY & SONS, US, 1 January 2001 (2001-01-01), pages 20-83, XP002365513 ISBN: 978-0-471-05669-0 * page 20 - page 83 * | 1-4,8-17 | INV. G06K9/00 G06K9/62 H04L29/06 |
| T | S. S. IYENGAR ET AL: "An Overview" 2005, CHAPMAN ET HALL / CRC , DISTRIBUTED SENSOR NETWORKS: EDITED BY S. SITHARAMA IYENGAR ET RICHARD R. BROOKS (CHAPTER 1) , XP002518383 * page 3 - page 10 * | 1-17 | |
| T | AKBAR M. SAYEED: "Object Detection and Classification" 2005, CHAPMAN ET HALL / CRC , DISTRIBUTED SENSOR NETWORKS: EDITED BY S. SITHARAMA IYENGAR ET RICHARD R. BROOKS (CHAPTER 7) , XP002518384 * page 97 - page 114 * | 1-17 | |
| T | D. W. CARMAN: "Data Security Perspectives" 2005, CHAPMAN ET HALL / CRC , DISTRIBUTED SENSOR NETWORKS: EDITED BY S. SITHARAMA IYENGAR ET RICHARD R. BROOKS (CHAPTER 30) , XP002518385 * page 597 - page 611 * | 1-17 | TECHNICAL FIELDS SEARCHED (IPC) G06K |

-/--

The present search report has been drawn up for all claims

| Place of search | Date of completion of the search | Examiner |
|---|---|---|
| The Hague | 10 March 2009 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

15

Europäisches
Patentamt

European
Patent Office

Office européen
des brevets

# EUROPEAN SEARCH REPORT

Application Number

EP 08 00 8989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | HAIRONG QI ET AL: "The Mobile-Agent Framework for Collaborative Processing in Sensor Networks" 2005, CHAPMAN ET HALL / CRC , DISTRIBUTED SENSOR NETWORKS: EDITED BY S. SITHARAMA IYENGAR ET RICHARD R. BROOKS (CHAPTER 41) , XP002518386 * page 801 - page 818 * | 1-17 | |
| T | A. S. LIM: "Distributed Services" 2005, CHAPMAN ET HALL / CRC , DISTRIBUTED SENSOR NETWORKS: EDITED BY S. SITHARAMA IYENGAR ET RICHARD R. BROOKS (CHAPTER 42) , XP002518387 * page 819 - page 834 * | 1-17 | |
| X | FANG SUN ET AL: "Two-stage computational cost reduction algorithm based on mahalanobis distance approximations" PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 2, 3 September 2000 (2000-09-03), pages 696-699, XP010533911 ISBN: 978-0-7695-0750-7 * Section "2. Two-stage computational cost reduction" * | 1-17 | TECHNICAL FIELDS SEARCHED (IPC) |

-/--

The present search report has been drawn up for all claims

| Place of search | Date of completion of the search | Examiner |
|---|---|---|
| The Hague | 10 March 2009 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EUROPEAN SEARCH REPORT**

Application Number

EP 08 00 8989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN F ET AL: "FAST AND PRECISE DISCRIMINANT FUNCTION CONSIDERING CORRELATIONS OF ELEMENTS OF FEATURE VECTORS AND ITS APPLICATION TO CHARACTER RECOGNITION" SYSTEMS & COMPUTERS IN JAPAN, WILEY, HOBOKEN, NJ, US, vol. 30, no. 14, 1 December 1999 (1999-12-01), pages 33-42, XP000873325 ISSN: 0882-1666 * the whole document * | 1-17 | |
| L | IZUMI T ET AL: "Characters recognition method based on vector field and simple linear regression model" COMMUNICATIONS AND INFORMATION TECHNOLOGY, 2004. ISCIT 2004. IEEE INTE RNATIONAL SYMPOSIUM ON SAPPORO, JAPAN OCT. 26-29, 2004, PISCATAWAY, NJ, USA,IEEE, vol. 1, 26 October 2004 (2004-10-26), pages 498-503, XP010783244 ISBN: 978-0-7803-8593-1 * page 498, left-hand column, paragraph 1 * * page 503, left-hand column, line 2 * | 1-17 | |

TECHNICAL FIELDS SEARCHED (IPC)

The present search report has been drawn up for all claims

| Place of search | Date of completion of the search | Examiner |
|---|---|---|
| The Hague | 10 March 2009 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030229471 A1